# EUROPEAN PATENT SPECIFICATION

(11) **EP 4 524 798 B1**
(45) Date of publication and mention of the grant of the patent: **29.07.2026**
(21) Application number: 23306519.2
(22) Date of filing: 14.09.2023
(51) Int. Cl.: G06F 21/62, H04L 9/00, G06F 21/64, H04L 9/32

(54) **DIGITAL ASSET MANAGEMENT SYSTEM, CORRESPONDING METHOD AND COMPUTER PROGRAM**
SYSTEM ZUR VERWALTUNG DIGITALER GÜTER, ZUGEHÖRIGES VERFAHREN UND COMPUTERPROGRAMM
SYSTÈME DE GESTION D'ACTIFS NUMÉRIQUES, PROCÉDÉ ET PROGRAMME D'ORDINATEUR CORRESPONDANTS

(43) Date of publication of application: 19.03.2025
(73) Proprietor: BULL SAS, 78340 Les Clayes-Sous-Bois (FR)
(72) Inventor: Luijendijk, Ivo, 7241KT Lochem (NL); Ivanov, Venko, 1188DE Amstelveen (NL); Lukaszewicz, Jaroslaw, 55-095 Domaszczyn (PL); Sinni, Daniel, Berwyn, 19312 (US)
(74) Representative: IPAZ

(56) References cited:
- EP-A1- 4 102 386
- GANG WANG ET AL: "SoK: Tokenization on Blockchain", vol. 20211122:113158, 21 November 2021 (2021-11-21), pages 1 - 9, XP061069353, Retrieved from the Internet <URL:https://eprint.iacr.org/2021/1536.pdf> [retrieved on 20211121]
- NGUYEN LINH T ET AL: "Blockchain-Empowered Trustworthy Data Sharing: Fundamentals, Applications, and Challenges", ARXIV.ORG, 12 March 2023 (2023-03-12), Ithaca, XP093124679, Retrieved from the Internet <URL:https://arxiv.org/pdf/2303.06546.pdf> [retrieved on 20240129], DOI: 10.48550/arxiv.2303.06546

## Description

### Field of the invention

The present invention relates to a data management system for managing access of a plurality of members to at least one digital asset.

The invention further relates to data management method and to a corresponding computer program.

The invention applies to the field of computer science, and more specifically to the access of members to a digital asset.

### Background

Supply chains generally require that data be shared in the fastest, most reliable and traceable way possible.

Therefore, it has been proposed to resort to blockchain technology. More specifically, permissioned blockchains are generally used, since they allow partners in the network to efficiently and reliably share data amongst themselves.

However, such approach is not fully satisfactory.

Indeed, with such approach, it becomes difficult to keep data private.

For instance, such problem arises when the blockchain scales to include competitors, as the data they are required to share can represent commercial value.

Additionally, there may be a regulatory reason for keeping data private (*e.g*., GDPR, the EU General Data Protection Regulation).

In these cases, data is generally kept off-chain, which means that the transparency and reliability of the data involved is strongly reduced.

A purpose of the present invention is to overcome at least one of these drawbacks.

Another purpose of the invention is to provide a solution for sharing data amongst a plurality of members, that is fast and reliable, even when involving private data that shouldn't be accessed by all members. Documents EP4102386A1, Gang WANG et al: "SoK: Tokenization on Blockchain",IACR, Intl. Association for Cryptologic Research, vol. 20211122:113158, 21 November 2021; Nguyen Linh et al: "Blockchain-Empowered Trustworthy Data Sharing: Fundamentals, Applications, and Challenges",arXiv.org, 12 March 2023, DOI: 10.48550/ arxiv.2303.06546 constitute relevant prior art.

### Summary of the invention

To this end, the present invention is a data management system of the aforementioned type, wherein each digital asset is associated with a public dataset and at least one private dataset,
the data management system including a blockchain network, at least one off-chain storage unit and a blockchain orchestrator:
- the blockchain network being configured to store, for each digital asset:
   - a respective non-fungible token including the corresponding public dataset and, for each private dataset, a corresponding fingerprint; and
   - for each corresponding private dataset, authorization information indicative of at least one authorized member, among the plurality of members, authorized to access said private dataset;
- each off-chain storage unit being distinct from the blockchain network and being configured to store at least one respective private dataset;
- the blockchain orchestrator being configured, for each digital asset, to:
   - check a compliance of each corresponding private dataset stored in each off-chain storage unit with the corresponding fingerprint stored in the respective non-fungible token; and
   - for each member, grant access to the public dataset and/or to at least one private dataset, based on the authorization information stored in the blockchain network.

Indeed, thanks to the invention, each private dataset is kept separate from the blockchain network, and only authorized members may have access to said private dataset.

Moreover, since authorization information and fingerprint(s) are stored in the blockchain network, reliability is guaranteed.

Consequently, the system according to the invention allows safe sharing information amongst several members, while keeping part of said information private, and preventing fraud on the private dataset side.

According to other advantageous aspects of the invention, the data management system includes one or several of the following features, taken alone or in any technically possible combination:
each off-chain storage unit is configured to store a respective private dataset;
for each member, the blockchain network comprises a respective node forming a member node, each off-chain storage unit being connected to a respective member node associated with the authorized member corresponding to the private dataset stored on said off-chain storage unit;
the blockchain network is configured to operate under the Ethereum protocol;
each non-fungible token is compliant with the ERC-721 standard;
each virtual asset is associated with a respective physical-to-virtual bridge including access management information for accessing the respective non-fungible token;
the data management system further comprises a publish/subscribe messaging module configured to route communication messages between the blockchain network, each off-chain storage unit and the blockchain orchestrator;
for each private dataset, the respective fingerprint is a result of applying a predetermined hash function to said private dataset.

According to another aspect of the same invention, it is proposed a computer-implemented data management method for managing access of a plurality of members to at least one digital asset,
each digital asset being associated with a public dataset and at least one private dataset,
for each digital asset:
   - a blockchain network storing:
      - a respective non-fungible token including the corresponding public dataset and, for each private dataset, a corresponding fingerprint; and
      - for each corresponding private dataset, authorization information indicative of at least one authorized member, among the plurality of members, authorized to access said private dataset;
   - at least one off-chain storage unit, distinct from the blockchain network, storing at least one respective private dataset among the at least one private dataset associated with said digital asset,
the data management method comprising, for each digital asset:
   - checking a compliance of each corresponding private dataset stored in each off-chain storage unit with the corresponding fingerprint stored in the respective non-fungible token; and
   - for each member, granting access to the public dataset and/or to at least one private dataset, based on the authorization information stored in the blockchain network.

According to another aspect of the same invention, it is proposed a computer program comprising instructions, which when executed by a computer, cause the computer to carry out the steps of the method as defined above.

The computer program may be in any programming language such as C, C++, JAVA, Python, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a smartphone, a tablet, a computer, a server, etc.

### Brief description of the drawings

Other advantages and characteristics will become apparent on examination of the detailed description of an embodiment which is in no way limitative, and the attached figures, where:

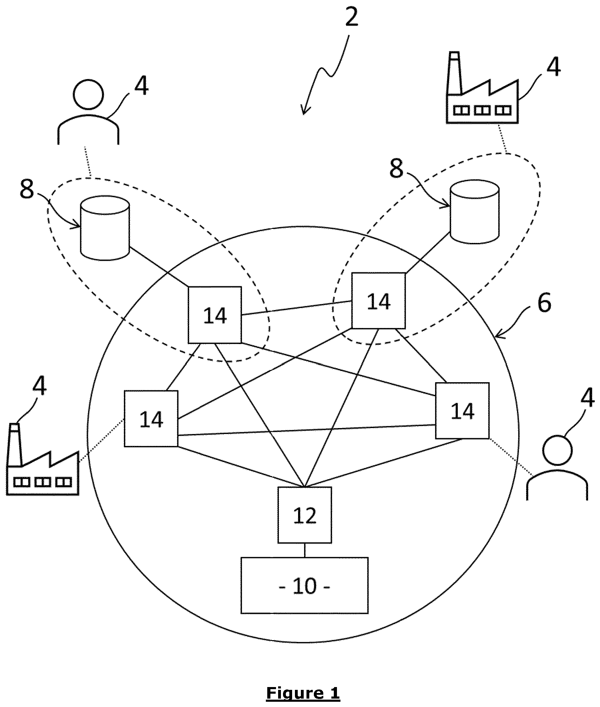

Figure 1 is a schematic representation of a data management system according to the invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the figures, elements common to several figures retain the same reference.

### Detailed description

A data management system 2 according to the invention is shown on figure 1.

The data management system 2, also referred to as "digital asset management system", is designed for managing access of a plurality of members 4 to at least one digital asset.

More precisely, the data management system 2 aims at allowing data to be exchanged and operations to be performed by said members 4 in relation to a given digital asset, whilst ensuring privacy of the data owned by each member 4. Such members may, for example, be organizations cooperating as parts of a same consortium.

By "digital asset", it is meant, in the context of the invention, a form of intangible property or content that exists in a digital format and holds a value to individuals, organization, or entities. Such digital asset may refer to any form of digital data that can be owned, exchanged, or used. The digital asset is associated with a corresponding usage right. Digital assets may be used to exchange or use other assets, such as real-estate, electronic devices, cars, software code or even AI algorithms.

Each digital asset is associated with a public dataset and at least one private dataset. The public dataset is meant to be accessible to *(i.e.,* at least readable by) each member 4. On the other hand, each private dataset is owned by a single member 4 (or "owner"), and should be accessible either to the owner alone, or to the owner and one or more predetermined authorized members.

The data management system 2 includes a blockchain network 6 for storing the public dataset corresponding to each digital asset, at least one off-chain storage unit 8, each configured to store at least one respective private dataset, and a blockchain orchestrator 10, especially for managing access to each private dataset.

Preferably, the data management system 2 further comprises a publish/subscribe messaging module 12.

The blockchain network 6 comprises a plurality of nodes 14 connected to one another so as to operate as a distributed ledger.

Advantageously, for each member 4, the blockchain network 6 comprises a respective node 14 forming a member node.

Preferably, the blockchain network 6 is configured to operate under the Ethereum protocol. This is advantageous, since Ethereum is associated with longevity and continued development of blockchain applications, due to a very active developer community. Furthermore, Ethereum is associated with widely adopted token standards, including the ERC-721 standard, which is the preferred token standard employed in the framework of the invention, as will be described below.

Alternatively, the blockchain network 6 may be configured to operate under the Solano protocol, Cardano protocol, Polkadot protocol, or the like.

For each digital asset, the blockchain network 6 is configured to store a respective non-fungible token and corresponding authorization information. For each digital asset, the respective non-fungible token is intrinsically linked to (and represents) said digital asset.

For each digital asset, the respective non-fungible token includes the corresponding public dataset.

Moreover, for each digital asset, and for each corresponding private dataset, the respective non-fungible token also includes a respective fingerprint. Determination of said fingerprint will be disclosed below.

Preferably, each non-fungible token is compliant with the ERC-721 standard. Such feature is advantageous, since the ERC-721 standard is a widely accepted standard for tokenization, which allows for easier development and lower barriers for interoperability with other platforms.

In some embodiments, at least one, and in particular each, non-fungible token may deviate from the ERC-721 standard in that it may bot use the public exchange feature for change of ownership. Reason for this, is that the NFTs are not meant to easily change owner in order to protect the data involved and also to protect the split between on-chain and off-chain data.

Advantageously, each virtual asset is associated with a respective physical-to-virtual bridge. Such physical-to-virtual bridge includes access management information for accessing the respective non-fungible token. For instance, the physical-to-virtual bridge is a QR code (or "Quick Response code").

For each digital asset, and for each corresponding private dataset, the authorization information is indicative of at least one authorized member 4, among the plurality of members 4, that is authorized to access said private dataset.

Preferably, for each digital asset, the authorization information may also be indicative of each member 4 that is authorized to access the corresponding public dataset.

The authorization information may also be indicative of authorized actions that each member 4 may be authorized to perform on the public dataset and/or each private dataset, such as "read only", "read and write" and/or "delete".

In the case where the blockchain network 6 is a permissioned network, the authorization information may be managed by a single member (for instance, a service provider providing the data management system 2, or a predetermined customer of said service provider). Alternatively, in the case where the blockchain network 6 is a permissionless network, the authorization information may be managed by a each member 4.

Each off-chain storage unit 8 is associated with a respective member 4. More precisely, each off-chain storage unit 8 is intended to be used by the respective member to safe-keep sensitive data, namely each private dataset associated with said member 4. In other words, each off-chain storage unit 8 is associated with a respective owner, as previously defined.

Each off-chain storage unit 8 is distinct from the blockchain network 6. That is, the off-chain storage unit 8 is not a node of the blockchain network 6.

Furthermore, each off-chain storage unit 8 is configured to store at least one respective private dataset. For instance, the off-chain storage unit 8 may be any database that can be accessed through the blockchain network 6.

Moreover, as stated previously, the blockchain network 6 may comprise, for each member 4, a respective member node 14. In this case, each off-chain storage unit 8 is connected to a respective member node, which is the node 14 associated with the owner of the private dataset stored on said off-chain storage unit 8.

Advantageously, the off-chain storage unit 8 is configured to determine the fingerprint corresponding to each private dataset stored thereon. In this case, the off-chain storage unit 8 is also configured to output, to the blockchain network 6, each determined the fingerprint.

Preferably, for each private dataset, the corresponding the off-chain storage unit 8 is configured to determine the respective fingerprint as a result of applying a predetermined hash function to said private dataset. For instance, for each private dataset, the corresponding the off-chain storage unit 8 is configured to determine the respective fingerprint as a result of applying an SHA-256 hash function to said private dataset.

Moreover, each off-chain storage unit 8 is configured to update the fingerprint corresponding to each respective private dataset at each modification of said private dataset (for instance by the corresponding owner and/or an authorized member 4). In this case, the off-chain storage unit 8 is also configured to output, to the blockchain network 6, each updated fingerprint.

The blockchain orchestrator 10 is intended to manage access of each member 4 to the public dataset stored on the blockchain network 6 and/or each private dataset, each stored on a corresponding off-chain storage unit 8.

Preferably, the blockchain orchestrator 10 is a microservice executed on the back-end and acting as a blockchain agnostic facade to the blockchain network nodes 14.

For each digital asset, the blockchain orchestrator 10 is configured to grant access to the corresponding public dataset and/or to at least one corresponding private dataset, based on the authorization information stored in the blockchain network 6. In other words, the blockchain orchestrator 10 is configured to allow each member 4 to have access to a public dataset and/or a private dataset (or prevent said member 4 from having access to a public dataset and/or a private dataset) based on the authorization information stored in the blockchain network 6.

Moreover, for each digital asset, the blockchain orchestrator 10 is configured to check a compliance of each corresponding private dataset stored in each off-chain storage unit 8 with the corresponding fingerprint stored in the respective non-fungible token.

For instance, for each digital asset, the blockchain orchestrator 10 is configured to request each off-chain storage unit 8 to compute and output the fingerprint associated with each private dataset stored thereon. In this case, the blockchain orchestrator 10 is configured to compare each received fingerprint with the corresponding fingerprint stored in the respective non-fungible token.

Preferably, the blockchain orchestrator 10 is also configured to output an alert signal if a given received fingerprint does not match the corresponding fingerprint stored in the respective non-fungible token.

As mentioned previously, the publish/subscribe messaging module 12 is configured to route communication messages between the blockchain network 6, each off-chain storage unit 8 and the blockchain orchestrator 10, thereby operating as an intermediary between said blockchain network 6, off-chain storage unit(s) 8 and blockchain orchestrator 10. This is advantageous due to the asynchronous nature of blockchain networks. Indeed, sending transactions to the blockchain network and obtaining the corresponding result (success/failure) may take a couple of seconds to execute. Consequently, the performances of synchronous REST API (that will block the client application) are not satisfactory with regards to scalability/performance. The publish/subscribe messaging module (which may operate based on commercially available solutions such as Apache's Kafka) provides a good solution for the scalability problem and fits naturally into the aforementioned asynchronous processing pattern.

### Operation

Operation of the data management system 2 will now be disclosed.

First, at least one digital asset is created. Creation of each digital asset may be handled by the blockchain operator 10.

More precisely, for each digital asset, the respective non-fungible token and authorization information are stored in the blockchain network 6.

As previously mentioned, for each digital asset, the respective non-fungible token includes the corresponding public dataset and, for each private dataset, a corresponding fingerprint.

Moreover, for each digital asset, each corresponding private dataset is stored in a respective off-chain storage unit 8.

Then, when a member requests access to any given digital asset, the blockchain operator 10 grants (or denies) access, to said member, to the public dataset and/or to at least one private dataset, based on the authorization information stored in the blockchain network 6.

Moreover, over time, the blockchain operator 10 checks that, for each digital asset, each corresponding private dataset stored in each off-chain storage unit 8 is compliant with the corresponding fingerprint stored in the respective non-fungible token.

Furthermore, if an owner modifies the private dataset that he or she owns in the corresponding off-chain storage unit 8, said off-chain storage unit 8 outputs, to the blockchain operator 10, an updated fingerprint for modified said private dataset. Consequently, the blockchain operator 10 updates said fingerprint in the corresponding non-fungible token stored in the blockchain network 6.

Of course, the invention is not limited to the examples detailed above.

## Claims

1. A data management system (2) for managing access of a plurality of members (4) to at least one digital asset,
each digital asset being associated with a public dataset and at least one private dataset,
the data management system (2) including a blockchain network (6), at least one off-chain storage unit (8) and a blockchain orchestrator (10):
- the blockchain network (6) being configured to store, for each digital asset:
• a respective non-fungible token including the corresponding public dataset and, for each private dataset, a corresponding fingerprint; and
• for each corresponding private dataset, authorization information indicative of at least one authorized member, among the plurality of members, authorized to access said private dataset;
- each off-chain storage unit (8) being distinct from the blockchain network (6) and being configured to store at least one respective private dataset;
- the blockchain orchestrator (10) being configured, for each digital asset, to:
• check a compliance of each corresponding private dataset stored in each off-chain storage unit (8) with the corresponding fingerprint stored in the respective non-fungible token; and
• for each member, grant access to the public dataset and/or to at least one private dataset, based on the authorization information stored in the blockchain network (6), each off-chain storage unit (8) being further configured to, upon modification of a private dataset stored thereon:
- determine an updated fingerprint corresponding to said modified private dataset; and
- output, to the blockchain orchestrator (10), the determined updated fingerprint, the blockchain orchestrator (10) being further configured to update said fingerprint in the corresponding non-fungible token stored in the blockchain network (6).

2. The data management system according to claim 1, wherein each off-chain storage unit (8) is configured to store a respective private dataset.

3. The data management system according to claim 2, wherein for each member (4), the blockchain network (6) comprises a respective node forming a member node (14),
each off-chain storage unit (8) being connected to a respective member node (14) associated with the authorized member (4) corresponding to the private dataset stored on said off-chain storage unit (8).

4. The data management system according to any one of claims 1 to 3, wherein the blockchain network (6) is configured to operate under the Ethereum protocol.

5. The data management system according to claim 4, wherein each non-fungible token is compliant with the ERC-721 standard.

6. The data management system according to any one of claims 1 to 5,
wherein each digital asset is associated with a respective physical-to-virtual bridge including access management information for accessing the respective non-fungible token.

7. The data management system according to any one of claims 1 to 6, further comprising a publish/subscribe messaging module (12) configured to route communication messages between the blockchain network (6), each off-chain storage unit (8) and the blockchain orchestrator (10).

8. The data management system according to any one of claims 1 to 7, wherein, for each private dataset, the respective fingerprint is a result of applying a predetermined hash function to said private dataset.

9. A computer-implemented data management method for managing access of a plurality of members (4) to at least one digital asset,
each digital asset being associated with a public dataset and at least one private dataset,
for each digital asset:
- a blockchain network (6) storing:
• a respective non-fungible token including the corresponding public dataset and, for each private dataset, a corresponding fingerprint; and
• for each corresponding private dataset, authorization information indicative of at least one authorized member, among the plurality of members, authorized to access said private dataset;
- at least one off-chain storage unit (8), distinct from the blockchain network (6), storing at least one respective private dataset among the at least one private dataset associated with said digital asset,
the data management method comprising, for each digital asset:
- checking a compliance of each corresponding private dataset stored in each off-chain storage unit with the corresponding fingerprint stored in the respective non-fungible token; and
- for each member, granting access to the public dataset and/or to at least one private dataset, based on the authorization information stored in the blockchain network (6),
each off-chain storage unit (8) being further configured to, upon modification of a private dataset stored thereon:
- determine an updated fingerprint corresponding to said modified private dataset; and
- output, to the blockchain orchestrator (10), the determined updated fingerprint, the blockchain orchestrator (10) being further configured to update said fingerprint in the corresponding non-fungible token stored in the blockchain network (6).

10. Computer program comprising instructions, which when executed by a computer, cause the computer to carry out the steps of the method according claim 9.

## Patentansprüche

1. Datenverwaltungssystem (2) zum Verwalten von Zugriff einer Vielzahl von Mitgliedern (4) auf mindestens ein digitales Gut,
wobei jedes digitale Gut mit einem öffentlichen Datensatz und mindestens einem privaten Datensatz verknüpft ist,
wobei das Datenverwaltungssystem (2) ein Blockchain-Netzwerk (6), mindestens eine Speichereinheit (8) außerhalb der Chain und einen Blockchain-Orchestrator (10) umfasst:
- wobei das Blockchain-Netzwerk (6) konfiguriert ist, um, für jedes digitale Gut, zu speichern:
• einen jeweiligen nicht-fungiblen Token, einschließlich des entsprechenden öffentlichen Datensatzes, und, für jeden privaten Datensatz, eines entsprechenden Fingerabdrucks; und
• für jeden entsprechenden privaten Datensatz Berechtigungsinformationen, die mindestens ein berechtigtes Mitglied, aus der Vielzahl von Mitgliedern, das berechtigt ist, auf den privaten Datensatz zuzugreifen, angeben;
- wobei jede Speichereinheit (8) außerhalb der Chain von dem Blockchain-Netzwerk (6) verschieden ist und konfiguriert ist, um mindestens einen jeweiligen privaten Datensatz zu speichern;
- wobei der Blockchain-Orchestrator (10), für jedes digitale Gut, konfiguriert ist zum:
• Überprüfen einer Übereinstimmung jedes entsprechenden privaten Datensatzes, der in jeder Speichereinheit (8) außerhalb der Chain gespeichert ist, mit dem entsprechenden Fingerabdruck, der in dem jeweiligen nicht-fungiblen Token gespeichert ist; und
• für jedes Mitglied, Gewähren von Zugriff auf den öffentlichen Datensatz und/oder auf mindestens einen privaten Datensatz, basierend auf den Berechtigungsinformationen, die in dem Blockchain-Netzwerk (6) gespeichert sind, wobei jede Speichereinheit (8) außerhalb der Chain, bei Modifikation eines gespeicherten privaten Datensatzes, der darauf gespeichert ist, ferner konfiguriert ist zum:
- Bestimmen eines aktualisierten Fingerabdrucks, der dem modifizierten privaten Datensatz entspricht; und
- Ausgeben, an den Blockchain-Orchestrator (10), des bestimmten aktualisierten Fingerabdrucks, wobei der Blockchain-Orchestrator (10) ferner konfiguriert ist, um den Fingerabdruck in dem entsprechenden nicht-fungiblen Token, der in dem Blockchain-Netzwerk (6) gespeichert ist, zu aktualisieren.

2. Datenverwaltungssystem nach Anspruch 1, wobei jede Speichereinheit (8) außerhalb der Chain konfiguriert ist, um einen jeweiligen privaten Datensatz zu speichern.

3. Datenverwaltungssystem nach Anspruch 2, wobei für jedes Mitglied (4) das Blockchain-Netzwerk (6) einen jeweiligen Knoten, der einen Mitgliedsknoten (14) bildet, umfasst,
wobei jede Speichereinheit (8) außerhalb der Chain mit einem jeweiligen Mitgliedsknoten (14) verbunden ist, der mit dem berechtigten Mitglied (4) verknüpft ist, das dem privaten Datensatz, der auf der Speichereinheit (8) außerhalb der Chain gespeichert ist, entspricht.

4. Datenverwaltungssystem nach einem der Ansprüche 1 bis 3, wobei das Blockchain-Netzwerk (6) konfiguriert ist, um unter dem Ethereum-Protokoll betrieben zu werden.

5. Datenverwaltungssystem nach Anspruch 4, wobei jeder nicht-fungible Token mit dem ERC-721-Standard in Übereinstimmung ist.

6. Datenverwaltungssystem nach einem der Ansprüche 1 bis 5, wobei jedes digitale Gut mit einer jeweiligen physisch-zu-virtuell-Brücke verknüpft ist, einschließlich Zugriffsverwaltungsinformationen zum Zugreifen auf den jeweiligen nicht-fungiblen Token.

7. Datenverwaltungssystem nach einem der Ansprüche 1 bis 6, ferner umfassend ein Publish/Subscribe-Nachrichtenmodul (12), das konfiguriert ist, um Kommunikationsnachrichten zwischen dem Blockchain-Netzwerk (6), jeder Speichereinheit (8) außerhalb der Chain und dem Blockchain-Orchestrator (10) zu routen.

8. Datenverwaltungssystem nach einem der Ansprüche 1 bis 7, wobei, für jeden privaten Datensatz, der jeweilige Fingerabdruck ein Ergebnis eines Anwendens einer zuvor bestimmten Hash-Funktion auf den privaten Datensatz ist.

9. Computerimplementiertes Datenverwaltungsverfahren zum Verwalten von Zugriff einer Vielzahl von Mitgliedern (4) auf mindestens ein digitales Gut,
wobei jedes digitale Gut mit einem öffentlichen Datensatz und mindestens einem privaten Datensatz verknüpft ist,
für jedes digitale Gut:
- ein Blockchain-Netzwerk (6) speichert:
• einen jeweiligen nicht-fungiblen Token, einschließlich des entsprechenden öffentlichen Datensatzes, und, für jeden privaten Datensatz, eines entsprechenden Fingerabdrucks; und
• für jeden entsprechenden privaten Datensatz Berechtigungsinformationen, die mindestens ein berechtigtes Mitglied, aus der Vielzahl von Mitgliedern, das berechtigt ist, auf den privaten Datensatz zuzugreifen, angeben;
- mindestens eine Speichereinheit (8) außerhalb der Chain, die von dem Blockchain-Netzwerk (6) verschieden ist, speichert mindestens einen jeweiligen privaten Datensatz aus dem mindestens einen privaten Datensatz, der mit dem digitalen Gut verknüpft ist,
wobei das Datenverwaltungsverfahren, für jedes digitale Gut, umfasst:
- Überprüfen einer Übereinstimmung jedes entsprechenden privaten Datensatzes, der in jeder Speichereinheit außerhalb der Chain gespeichert ist, mit dem entsprechenden Fingerabdruck, der in dem jeweiligen nicht-fungiblen Token gespeichert ist; und
- für jedes Mitglied, Gewähren von Zugriff auf den öffentlichen Datensatz und/oder auf mindestens einen privaten Datensatz, basierend auf den Berechtigungsinformationen, die in dem Blockchain-Netzwerk (6) gespeichert sind, wobei jede Speichereinheit (8) außerhalb der Chain, bei Modifikation eines gespeicherten privaten Datensatzes, der darauf gespeichert ist, ferner konfiguriert ist zum:
- Bestimmen eines aktualisierten Fingerabdrucks, der dem modifizierten privaten Datensatz entspricht; und
- Ausgeben, an den Blockchain-Orchestrator (10), des bestimmten aktualisierten Fingerabdrucks, wobei der Blockchain-Orchestrator (10) ferner konfiguriert ist, um den Fingerabdruck in dem entsprechenden nicht-fungiblen Token, der in dem Blockchain-Netzwerk (6) gespeichert ist, zu aktualisieren.

10. Computerprogramm, umfassend Anweisungen, die, wenn sie durch einen Computer ausgeführt werden, den Computer veranlassen, die Schritte des Verfahrens nach Anspruch 9 vorzunehmen.

## Revendications

1. Système de gestion de données (2) pour gérer un accès d'une pluralité de membres (4) à au moins un actif numérique,
chaque actif numérique étant associé à un jeu de données public et à au moins un jeu de données privé,
le système de gestion de données (2) comportant un réseau de chaînes de blocs (6), au moins une unité de stockage hors chaîne (8) et un orchestrateur de chaînes de blocs (10) :
- le réseau de chaînes de blocs (6) étant configuré pour stocker, pour chaque actif numérique :
• un jeton non fongible respectif comportant le jeu de données public correspondant et, pour chaque jeu de données privé, une empreinte numérique correspondante ; et
• pour chaque jeu de données privé correspondant, des informations d'autorisation indicatives d'au moins un membre autorisé, parmi la pluralité de membres, autorisé à accéder audit jeu de données privé ;
- chaque unité de stockage hors chaîne (8) étant distincte du réseau de chaînes de blocs (6) et étant configurée pour stocker au moins un jeu de données privé respectif ;
- l'orchestrateur de chaîne de blocs (10) étant configuré de façon à, pour chaque actif numérique :
• vérifier une conformité de chaque jeu de données privé correspondant stocké dans chaque unité de stockage hors chaîne (8) avec l'empreinte numérique correspondante stockée dans le jeton non fongible respectif ; et
• pour chaque membre, autoriser l'accès au jeu de données public et/ou à au moins un jeu de données privé, sur la base des informations d'autorisation stockées dans le réseau de chaînes de blocs (6),
chaque unité de stockage hors chaîne (8) étant, en outre, configurée pour, lors de la modification d'un jeu de données privé stocké sur celle-ci :
- déterminer une empreinte numérique mise à jour correspondant audit jeu de données privé modifié ; et
- délivrer en sortie, à l'orchestrateur de chaîne de blocs (10), l'empreinte numérique mise à jour déterminée, l'orchestrateur de chaîne de blocs (10) étant, en outre, configuré pour mettre à jour ladite empreinte numérique dans le jeton non fongible correspondant stocké dans le réseau de chaînes de blocs (6).

2. Système de gestion de données selon la revendication 1, dans lequel chaque unité de stockage hors chaîne (8) est configurée pour stocker un jeu de données privé respectif.

3. Système de gestion de données selon la revendication 2, dans lequel, pour chaque membre (4), le réseau de chaînes de blocs (6) comprend un nœud respectif formant un nœud membre (14),
chaque unité de stockage hors chaîne (8) étant connectée à un nœud membre respectif (14) associé au membre autorisé (4) correspondant au jeu de données privé stocké sur ladite unité de stockage hors chaîne (8).

4. Système de gestion de données selon l'une quelconque des revendications 1 à 3, dans lequel le réseau de chaînes de blocs (6) est configuré pour fonctionner sous le protocole Ethereum.

5. Système de gestion de données selon la revendication 4, dans lequel chaque jeton non fongible est conforme à la norme ERC-721.

6. Système de gestion de données selon l'une quelconque des revendications 1 à 5, dans lequel chaque actif numérique est associé à un pont physique-virtuel respectif comportant des informations de gestion d'accès permettant d'accéder au jeton non fongible respectif.

7. Système de gestion de données selon l'une quelconque des revendications 1 à 6, comprenant, en outre, un module de messagerie de publication/abonnement (12) configuré pour acheminer des messages de communication entre le réseau de chaînes de blocs (6), chaque unité de stockage hors chaîne (8) et l'orchestrateur de chaîne de blocs (10).

8. Système de gestion de données selon l'une quelconque des revendications 1 à 7, dans lequel, pour chaque jeu de données privé, l'empreinte numérique respective est un résultat de l'application d'une fonction de hachage prédéterminée audit jeu de données privé.

9. Procédé de gestion de données mis en œuvre par ordinateur pour gérer un accès d'une pluralité de membres (4) à au moins un actif numérique,
chaque actif numérique étant associé à un jeu de données public et à au moins un jeu de données privé,
pour chaque actif numérique :
- un réseau de chaînes de blocs (6) stockant :
• un jeton non fongible respectif comportant le jeu de données public correspondant et, pour chaque jeu de données privé, une empreinte numérique correspondante ; et
• pour chaque jeu de données privé correspondant, des informations d'autorisation indiquant au moins un membre autorisé, parmi la pluralité de membres, autorisé à accéder audit jeu de données privé ;
- au moins une unité de stockage hors chaîne (8), distincte du réseau de chaînes de blocs (6), stockant au moins un jeu de données privé respectif parmi l'au moins un jeu de données privé associé audit actif numérique,
le procédé de gestion de données comprenant, pour chaque actif numérique :
- la vérification d'une conformité de chaque jeu de données privé correspondant stocké dans chaque unité de stockage hors chaîne avec l'empreinte numérique correspondante stockée dans le jeton non fongible respectif ; et
- pour chaque membre, l'autorisation de l'accès au jeu de données public et/ou à au moins un jeu de données privé, sur la base des informations d'autorisation stockées dans le réseau de chaînes de blocs (6),
chaque unité de stockage hors chaîne (8) étant, en outre configurée pour, lors de la modification d'un jeu de données privé stocké sur celle-ci :
- déterminer une empreinte numérique mise à jour correspondant audit jeu de données privé modifié ; et
- délivrer en sortie, à l'orchestrateur de chaîne de blocs (10), l'empreinte numérique mise à jour déterminée, l'orchestrateur de chaîne de blocs (10) étant en outre configuré pour mettre à jour ladite empreinte numérique dans le jeton non fongible correspondant stocké dans le réseau de chaînes de blocs (6).

10. Programme informatique comprenant des instructions qui, lorsqu'elles sont exécutées par un ordinateur, amènent l'ordinateur à réaliser les étapes du procédé selon la revendication 9.
